# EUROPÄISCHE PATENTSCHRIFT

(11) **EP 0 986 023 B1**
(45) Veröffentlichungstag und Bekanntmachung des Hinweises auf die Patenterteilung: **03.05.2006**
(21) Anmeldenummer: 99116622.4
(22) Anmeldetag: 25.08.1999
(51) Int. Cl.: G06K 17/00, G06K 1/12

(54) **Vorrichtung zum Personalisieren von Identifikationskarten**
Device for personalisation of ID-cards
Appareil de personalisation de cartes d'identification

(30) Priorität: 07.09.1998 DE 19840811
(43) Veröffentlichungstag der Anmeldung: 15.03.2000
(73) Patentinhaber: Kunz GmbH, 1220 Wien (AT)
(72) Erfinder: Dorner, Frank, 1220 Wien (AT)
(74) Vertreter: Haft, von Puttkamer, Berngruber, Czybulka

(56) Entgegenhaltungen:
- DE-A- 19 644 306
- US-A- 5 310 039

## Beschreibung

Die Erfindung bezieht sich auf eine Vorrichtung zum Personalisieren von Identifikationskarten mit integrierter Schaltung nach dem Oberbegriff des Anspruchs 1.

Eine derartige Vorrichtung ist aus DE 196 44 306 A1 bekannt. Als Personalisierungsstation ist eine Druckstation vorgesehen, mit der Identifikationskarten mit integrierter Schaltung, sog. Chip-Karten, nach ISO7816-2 bedruckt werden können. Der Rotor dient zum Wenden der Karten, um sie auf beiden Seiten zu bedrucken. Während das Bedrucken nur wenige Sekunden dauert, ist das Laden der Chips zeitaufwendiger. Um die Zeit beim Wenden der Karten zu nutzen, sind bei der bekannten Vorrichtung daher am Rotor mehrere Kontaktiereinrichtungen vorgesehen, mit denen die Chips während des Wendens der Karten gleichzeitig geladen werden.

Um die Karten den einzelnen Kontaktiereinrichtungen zuzuführen, ist bei der bekannten Vorrichtung eine entsprechende Anzahl von Kartentransporteinrichtungen am Rotor notwendig. Zur Versorgung der Motoren der Kartentransporteinrichtungen und der Kontaktiereinrichtungen ist damit eine große Zahl elektrischer Leitungen erforderlich, die die Beweglichkeit des Rotors einschränken. Die Anzahl der Kontaktiereinrichtung ist daher begrenzt, so dass die Zeit zum Laden der Chips letztlich doch wieder die Ausgabegeschwindigkeit der Karten begrenzt, insbesondere wenn große Datenmengen geladen werden müssen, beispielsweise bei Prozessorchips.

Aus EP 0 597 135 A1 ist eine Vorrichtung zum Lesen und Beschreiben von Magnetkarten mit einem Rotor bekannt, um dessen Umfangschächte zum Kodieren der Magnetstreifen und bei Karten mit Chips ein weiterer Schacht mit einer Chiplesestation vorgesehen sind.

Aufgabe der Erfindung ist es, die Ausgabegeschwindigkeit von personalisierten Identifikationskarten mit Chips auf einfache Weise wesentlich zu steigern.

Dies wird erfindungsgemäß mit der im Anspruch 1 gekennzeichneten Vorrichtung erreicht. In den Unteransprüchen sind vorteilhafte Ausgestaltungen der Erfindung wiedergegeben.

Bei der erfindungsgemäßen Vorrichtung sind die Kontaktiereinrichtungen zum Laden der Chips stationär um den Umfang des Rotors angeordnet. Der Rotor bildet damit eine Art Drehscheibe zur Zufuhr der Karten zu den einzelnen Kontaktiereinrichtungen zum Laden der Chips.

Um die Karten von dem Rotor den einzelnen Kontaktiereinrichtungen zuzuführen und nach dem Laden der Karten von den Kontaktiereinrichtungen wieder zum Rotor zurückzutransportieren, ist jeder Ladekontaktiereinrichtung eine Kartentransporteinrichtung zugeordnet. Dabei können im Handel erhaltene Einheiten verwendet werden, die die Chipkarte einziehen, laden und nach dem Laden auswerfen. Der Transport der Chipkarten in diesen Einheiten kann durch Sensoren gesteuert sein.

Die elektrischen Leitungen zur Versorgung der Motoren der Kartentransporteinrichtungen, der Chipladekontaktiereinrichtungen und der Sensoren können aufgrund der stationären Anordnung problemlos verlegt werden.

Die Kartentransporteinrichtungen der Chipladeeinrichtungen weisen eine sich radial erstreckende Transportrichtung auf. Damit kann eine große Anzahl von sich um den Rotor radial erstreckenden Chipladeeinrichtungen vorgesehen werden. Dies hat zur Folge, dass die Ladezeit eine entsprechend Vielfaches der Bearbeitungsdauer jeder Karte in den weiteren Personalisierungsstationen betragen kann, beispielsweise ein Vielfaches der Druckdauer pro Karte in der oder den Druckstationen.

Mit der erfindungsgemäßen Vorrichtung können daher große Mengen von Daten auf Speicherchips geladen werden, insbesondere auch Programme auf Prozessorchips.

Während die stationären Chipladekontaktiereinrichtungen um den Umfang des Rotors vorgesehen sind, dient bei der erfindungsgemäßen Vorrichtung die weitere Kontaktiereinrichtung am Rotor zum Kontrolllesen der Chips.

Das Kontrolllesen kann auf unterschiedliche Art und Weise erfolgen. So können die Chips mit der Kontakteinrichtung an dem Rotor überprüft werden, bevor sie mit den um den Rotor stationär angeordneten Chipkontakteinrichtungen geladen werden.

Auf diese Weise werden unbrauchbare Karten ermittelt. Dabei kann es sich beispielsweise um eine Karte mit einem defekten Chip oder eine Karte mit einem für die Personalisierungsvorrichtung ungeeigneten Chip handeln. Die unbrauchbare Karte kann über eine stationär am Umfang des Rotors angeordnete Auswurfeinrichtung abgeführt und damit der weiteren Bearbeitung mit der erfindungsgemäßen Vorrichtung entzogen werden.

Mit der Kontrollleseeinrichtung am Rotor können nach dem Laden der Chips mit den um den Rotor angeordneten Chipladeeinrichtungen ferner Daten von den Chips gelesen werden. Die gelesenen Daten können verwendet werden, um zu überprüfen, ob die Chips korrekt geladen worden sind, insbesondere auch dazu, um die Chip-Daten und die Daten der wenigstens einen weiteren Personalisierungsstation aufeinander abzustimmen.

Diese weiteren Daten können z.B. optische und/oder magnetische Daten sein. So kann die weitere Personalisierungsstation eine Druckstation sein, mit der die Karte mit personenbezogenen Daten und/oder einem Bild des Karteninhabers bedruckt wird.

Zum Bedrucken kann eine Prägeeinrichtung vorgesehen sein, mit der von der Karte erhaben vorstehende alphanummerische Daten in die Karte geprägt werden.

Die Druckstation kann ferner durch einen Thermodruckkopf gebildet werden, der aus einer quer zur Kartentransportrichtung verlaufenden Reihe von mit einer EDV-Anlage einzeln ansteuerbaren Heizelementen besteht. Die Steuerung und Taktung des Transports der Karte erfolgt mit einem Schrittmotor, der die Karte in der Dichte der Heizelemtente entsprechenden Schritten an der Heizelementenreihe vorbeibewegt.

Die Karte kann mit einer thermosensitiven Schicht versehen oder es kann eine Farbtransferfolie vorgesehen sein, die zwischen der Karte und dem Thermodruckkopf hindurchbewegt wird. Mit einem solchen Thermodruckkopf können sowohl alphanummerische Daten wie ein Bild des Karteninhabers auf die Karte gedruckt werden.

Falls die Identitätskarte einen Magnetstreifen aufweist, kann die weitere Personalisierungsstation auch eine Kodiereinrichtung zum Beschreiben der Magnetkarte sein.

Die Chipkontrollleseeinrichtung am Rotor der erfindungsgemäßen Vorrichtung dient damit insbesondere zum Überprüfen der Übereinstimmung der personenbezogenen Daten der mit den Chipladeeinrichtungen geladenen Chips mit den aufgedruckten oder aufzudruckenden bzw. kodierten Daten der Karten. Mit der Kontrollleseeinrichtung braucht daher nur ein geringer Teil der Daten von den Chips herausgelesen zu werden, um beispielsweise die Übereinstimmung für die Druck- und/oder Kodierstation zu überprüfen. Die Zeit zum Kontrolllesen der Chips ist damit entsprechend kurz.

Die Karten werden nach dem Rücktransport von den Chipladeeinrichtungen zum Rotor vom Rotor zu der oder den weiteren Personalisierungsstationen oder zu einer Ausgabeeinheit gedreht, um dann mit der Kartentransporteinrichtung am Rotor der oder den benachbarten Personalisierungsstationen bzw. der Ausgabeeinheit zugeführt zu werden.

Die Zeit zum Drehen der Karten reicht zum Kontrolllesen mit der Chipkontaktiereinrichtung des Rotors aus. Das Kontrolllesen hat damit keinen Einfluß auf die Ausgabegeschwindigkeit der Karten.

Da zudem bei der erfindungsgemäßen Vorrichtung die Ladezeit in den um den Rotor verteilten Chipladeeinrichtungen ein Vielfaches der Bearbeitungsdauer der Karte in den weiteren Personalisierungsstationen, beispielsweise der Druckstation oder Magnetkartenkodierstation, beträgt, können erfindungsgemäß mit den Chipkontaktiereinrichtungen große Datenmengen geladen und die Chips kontrolliert werden. Dennoch wird die Ausgabegeschwindigkeit der Karten wesentlich erhöht, ggf. derart, dass die Kartenausgabegeschwindigkeit gar nicht mehr durch das Laden der Chips sondern durch die Bearbeitung der Karten in den weiteren Personalisierungsstationen, wie der Druck- oder Magnetstreifenkodierstation bestimmt wird.

Wenn die wenigstens eine weitere Personalisierungsstation dem Rotor nachgeordnet ist, können die Chipkarten dem Rotor direkt zugeführt werden, der sie dann vereinzelt, also den einzelnen, um ihn herum angeordneten Chipladeeinrichtungen zuführt.

Stattdessen kann die weitere Personalisierungsstation oder bei mehreren Personalisierungsstationen eine derselben vor dem Rotor angeordnet sein. So kann beispielsweise vor dem Rotor eine Druckstation vorgesehen sein. Der Rotor kann dann zum Wenden der Karte um 180° eingesetzt werden, wodurch die Karte mit dieser einen Druckstation auf beiden Seiten bedruckt werden kann, wie in DE 195 14 999 C2 näher beschrieben. Es kann jedoch auch eine Druckstation vor und eine Druckstation nach dem Rotor angeordnet sein, so dass die Karte mit der einen Druckstation auf einer Seite und nach dem Wenden mit dem Rotor mit der zweiten Druckstation auf der anderen Seite bedruckt wird.

Damit kann die Karte mit dem Rotor zur weiteren Bearbeitung gewendet werden. Das Wenden der Karte mit dem Rotor kann jedoch auch lediglich zum Weitertransport erfolgen, um die fertig personalisierte Karte beispielsweise mit einer bestimmten Seite z.B. der Vorderseite nach oben oder unten in der Ausgabestation abzulegen oder zu stapeln.

Unter einer Identifikationskarte sind erfindungsgemäß sowohl Ausweiskarten, also Karten, die eine Identifizierung des Inhabers ermöglichen oder ihn als Angehörigen einer Gruppe ausweisen, wie Berechtigungskarten, also Karten, die dem Inhaber die Inanspruchnahme bestimmter Leistungen ermöglichen, zu verstehen.

Nachstehend ist eine Ausführungsform der erfindungsgemäßen Vorrichtung anhand der Zeichnung beispielsweise näher erläutert. Darin zeigen jeweils schematisch:
- Fig. 1: einen Längsschnitt durch die Vorrichtung;
- Fig. 2: einen Schnitt entlang der Linie II-II in Fig. 1 in teilweiser Wiedergabe; und
- Fig. 3: eine Ansicht eines Teils des Rotors nach Fig. 1.

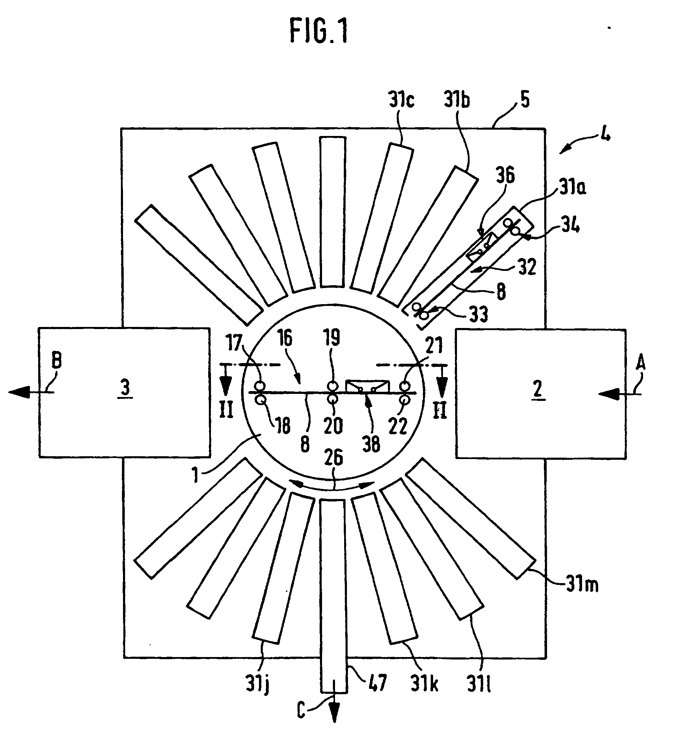

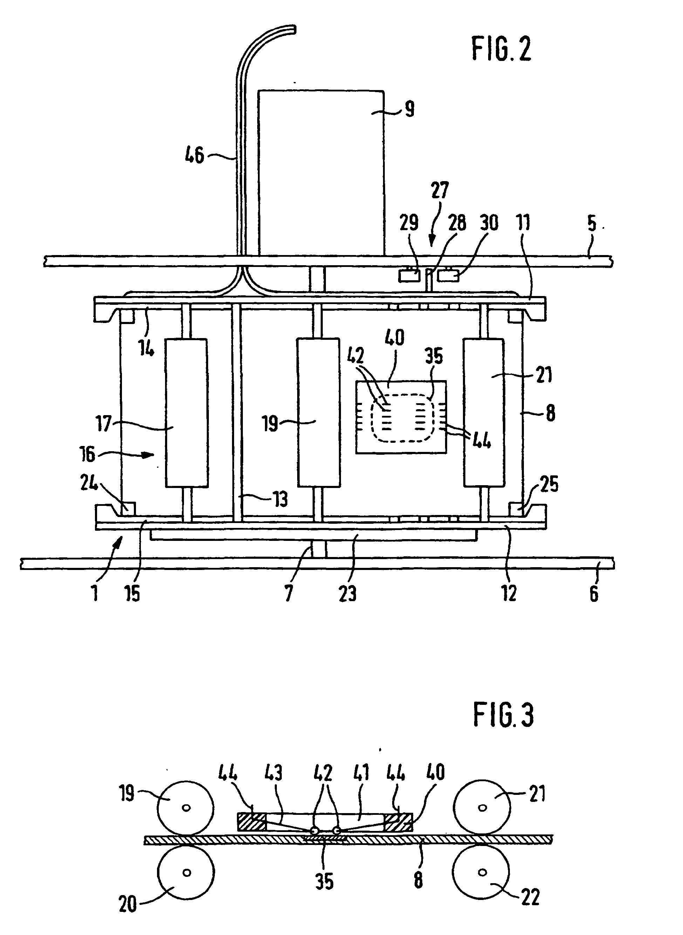

Gemäß Fig. 1 ist ein Rotor 1 zwischen zwei Druckstationen 2 und 3 angeordnet. Wie insbesondere aus Fig. 2 ersichtlich, ist der Rotor 1 zwischen den Seitenwänden 5, 6 eines Gehäuses 4 mit einer Welle 7 drehbar gelagert. Das heißt, der Rotor 1 ist um eine quer zur Längsachse der Karte 8 und in der Kartenebene liegende Drehachse drehbar. Zum Antrieb des Rotors 1 ist ein Schrittmotor 9 vorgesehen.

Der Rotor 1 weist zwei scheibenförmige Seitenwände 11, 12 auf, die durch Streben 13 miteinander verbunden sind. Die Seitenwände 11, 12 des Rotors 1 sind an der Innenseite mit nutförmigen Führungen 14, 15 versehen, in die die Karte 8 mit ihren Längskanten eingreift.

Zum Transport der Karte 8 in dem Rotor 1 ist eine Kartentransporteinrichtung 16 vorgesehen. Die Kartentransporteinrichtung 16 besteht aus beispielsweise drei Walzenpaaren 17, 18; 19, 20 bzw. 21, 22 auf der einen bzw. anderen Seite der Karte 8. Die Walzen 17 bis 22 werden durch einen am Rotor 1 befestigten, nicht dargestellten Motor über ein in Fig. 2 schematisch dargestelltes Zahnradgetriebe 23 angetrieben.

Mit dem Walzenpaar 21, 22 wird die Karte 8 übernommen, wenn sie, nachdem sie auf der Oberseite von der Druckstation 2 bedruckt worden ist, die Druckstation 2 verläßt.

Mit der Kartentransporteinrichtung 16 wird die Karte 8 also in radialer Richtung des Rotors 1 transportiert, und zwar in beiden Richtungen. An beiden Enden der Kartentransporteinrichtung 16 sind am Rotor 1 Sensoren 24, 25 angeordnet, beispielsweise Lichtschranken.

Der Rotor 1 ist mit dem Motor 9 in beiden Richtungen entsprechend dem Doppelpfeil 26 drehbar (Fig. 1).

In der in Fig. 1 dargestellten Position ist die Kartentransporteinrichtung 16 des Rotors 1 mit einem Ende auf die Druckstation 2 so ausgerichtet, dass die Karte 8 von der Druckstation 2 dem Rotor 1 zugeführt werden kann. Diese Drehstellung des Rotors 1 kann als Grundposition definiert werden, von der aus die Steuerung und Taktung der Drehung des Rotors 1 mit dem Schrittmotor 9 erfolgt.

Um diese Grundposition festzulegen, ist eine Einrichtung 27 vorgesehen, die gemäß Fig. 2 beispielsweise aus einem Vorsprung 28 an der Seitenwand 11 des Rotors 1 und einer Lichtschranke mit Lichtquelle 29 und Photozelle 30 an der Gehäusewand 5 besteht.

Um den Rotor 1 ist gemäß Fig. 1 eine Vielzahl von Chipladeeinrichtungen 31a...m angeordnet, die sich radial vom Rotor 1 wegerstrecken.

Die Chipladestationen 31a...m sind zwischen den beiden Wänden 5, 6 des Gehäuses 4 befestigt, also stationär. Da sie alle in gleicher Weise ausgebildet sind, ist in Fig. 1 nur die Chipladestation 31a näher dargestellt. Danach weist jede Chipladestation 31a...m eine Kartentransporteinrichtung 32 auf, die im wesentlichen so ausgebildet ist, wie die Kartentransporteinrichtung 16 des Rotors 1. Das heißt, die Kartentransporteinrichtung 32 der Chipladestationen 31a...m weist auf der einen bzw. anderen Seite der Karte 8 angeordnete Walzenpaare 33, 34 auf, die über ein nicht dargestelltes Getriebe durch einen nicht dargestellten Motor angetrieben werden, um die Karte 8 vom Rotor 1 zu übernehmen und einzuziehen und nach dem Laden des Chips 35 der Karte 8 (Fig. 3) in umgekehrter Richtung wieder zu dem Rotor 1 zurückzutransportieren.

Zum Laden der Chips 35 ist jede Station 31a...m mit einer Ladekontaktiereinrichtung 36 versehen, die so ausgebildet sein kann, wie die Kontaktiereinrichtung 38 am Rotor 1 zum Kontrolllesen, die insbesondere in Fig. 3 näher dargestellt ist und nachstehend noch erläutert wird.

Jede Chipladestation 31a...m kann zudem nicht dargestellte Sensoren, z.B. Kontakte aufweisen, mit denen die Position, beispielsweise die Endposition der Karte 8 in der jeweiligen Ladestation 31a...m erfaßt wird, in der das Laden der Chips 35 erfolgt.

Gemäß Fig. 2 weist der Rotor 1 eine Kontaktiereinrichtung zum Lesen der Chips 35 auf. Wie in Fig. 2 und 3 dargestellt, besteht die Kontaktiereinrichtung 38 aus einer Platte 40 z.B. aus Kunststoff, in der sich in Kartentransportrichtung erstreckenden Schlitzen 41 Chipkontakte 42 an federbelasteten Armen 43 befinden. Die Arme 43 sind mit Kontakten 44 versehen, an die die nicht dargestellte EDV-Anlage angeschlossen ist, mit der die Kontaktiereinrichtung 38 angesteuert wird.

Die elektrischen Leitungen zur Versorgung der elektrischen Einrichtungen am Rotor 1 werden durch ein Bündel 46 von Kabeln gebildet, welches sich mit dem Rotor 1 mitdreht.

An der unteren Seite des Rotors 1 ist zwischen den Wänden 5, 6 des Gehäuses 1 ein Schacht 47 befestigt, durch den unbrauchbare oder fehlerhaft geladene Karten in einen nicht dargestellten Behälter ausgeworfen werden.

Die unbedruckten, ungeladenen Chipkartenrohlinge werden entsprechend dem Pfeil A der Druckstation 2 zugeführt. Zu Beginn der Personalisierung wird eine von der Druckstation 2 einseitig bedruckte Karte dem Rotor 1 in der in Fig. 1 dargestellten Grundposition zugeführt, d.h. von der Kartentransporteinrichtung 16 des Rotors 1 eingezogen.

Der Rotor 1 wird mit dem von der EDV-Anlage gesteuerten Schrittmotor 9 gedreht, um die Karte 8 der nächstleeren Chipladestation z.B. 31a durch Betätigung der Kartentransporteinrichtung 16 des Rotors und der Kartentransporteinrichtung 32 der Chipladestation 31a zuzuführen. Der Rotor 1 wird in die Grundposition zurückgedreht und der Vorgang so oft wiederholt, bis sämtlichen Chipladestationen 31a...m Karten 8 zugeführt worden sind, die dort, von der EDV-Anlage gesteuert, geladen werden.

Zur weiteren Bearbeitung, d.h. zum Bedrucken der anderen Seite der Karte 8 mit der Druckstation 3, wird der Rotor 1 zu der Chipladestation 31a mit der zuerst eingeführten Karte 8 gedreht und die Karte 8 mit dem geladenen Chip 35 durch Betätigung der Kartentransporteinrichtung 32 und der Kartentransporteinrichtung 16 von der Chipladestation 31a in den Rotor 1 zurücktransportiert. Der Rotor 1 wird nun, durch den Schrittmotor 9 gesteuert, so gedreht, dass die Karte 8 der Druckvorrichtung 3 gewendet zugeführt wird. Während des Drehens des Rotors 1 wird der Chip 35 der Karte 8 mit der Kontaktiereinrichtung 38 am Rotor 1 mit der EDV-Anlage kontrollgelesen und bei korrekten gelesenen Daten die Druckvorrichtung 3 zum Bedrucken der gewendeten Karte 8 mit der EDV-Anlage entsprechend angesteuert.

Alsdann wird der leeren Chipladestation 31a von der Druckstation 2 mit dem Rotor 1 eine neue Karte 8 zum Laden des Chips 35 zugeführt, worauf der benachbarten Chipladestation 31b die Karte 8 mit dem geladenen Chip 35 mit dem Rotor 1 entnommen wird, der sie dann wendet und der Druckstation 3 zum Bedrucken der Rückseite zuführt. Von dort wird die fertige Karte 8 gemäß dem Pfeil B der Ausgabestation übergeben. Diese Vorgänge werden so oft wiederholt, wie Karten personalisiert werden sollen.

Falls sich eine Karte 8 beim Kontrolllesen mit der Kontaktiereinrichtung 38 am Rotor 1 als fehlerhaft erweist, wird sie über den Schacht 47 gemäß dem Pfeil C ausgeworfen. Auch können die Karten 8, bevor sie einer der Ladestationen 31a...m zugeführt werden, mit der Kontaktiereinrichtung 38 kontrollgelesen werden, um Karten 8, die fehlerhafte oder ungeeignete Chips 35 aufweisen, über den Schacht 47 auszusondern.

## Patentansprüche

1. Vorrichtung zum Personalisieren von Identifikationskarten mit integrierter Schaltung mit einem um eine quer zur Kartenlängsachse verlaufende Drehachse drehbaren Rotor mit einer Kartentransporteinrichtung, mit mehreren Kontaktiereinrichtungen zum gleichzeitigen Laden der integrierten Schaltungen mehrerer Karten mit Daten und mit wenigstens einer weiteren Personalisierungsstation, **dadurch gekennzeichnet, dass** die Kontaktiereinrichtungen (31a...m) zum Laden der integrierten Schaltungen (35) mit Daten stationär um den Umfang des Rotors (1) angeordnet und jeweils mit Kartentransporteinrichtungen (32) versehen sind, die die von der Kartentransporteinrichtung (16) des Rotors (1) zugeführten Karten (8) aufnehmen und nach dem Laden mit Daten zur Kartentransporteinrichtung (16) des Rotors (1) zurücktransportieren, und dass an dem Rotor (1) wenigstens eine weitere Kontaktiereinrichtung (38) zum Kontrolllesen der integrierten Schaltung (35) vorgesehen ist.

2. Vorrichtung nach Anspruch 1, **dadurch gekennzeichnet, dass** der Drehantrieb des Rotors (1) als Schrittmotor (9) ausgebildet ist.

3. Vorrichtung nach Anspruch 1 oder 2, **dadurch gekennzeichnet, dass** eine Einrichtung (27) zur Bestimmung der Grundposition der Drehstellung des Rotors (1) vorgesehen ist.

4. Vorrichtung nach einem der vorstehenden Ansprüche, **dadurch gekennzeichnet, dass** am Umfang des Rotors (1) eine Auswurfeinrichtung (47) für unbrauchbare oder fehlerhaft mit Daten geladene Karten (8) vorgesehen ist.

5. Vorrichtung nach einem der vorstehenden Ansprüche, **dadurch gekennzeichnet, dass** der Rotor (1) zum Wenden der Karten (8) ausgebildet ist.

## Revendications

1. Dispositif de personnalisation de cartes d'identification avec circuit intégré, comportant un rotor rotatif autour d'un axe de rotation s'étendant transversalement à l'axe longitudinal de la carte avec un moyen de transport de cartes, comportant plusieurs moyens d'établissement de contacts pour charger simultanément les circuits intégrés de plusieurs cartes avec des données, et comportant au moins une autre station de personnalisation, **caractérisé en ce que** les moyens d'établissement de contact (31a...m) pour charger les circuits intégrés (35) avec des données sont agencés de manière stationnaire autour de la périphérie du rotor (1) et sont chacun pourvus de moyens de transport de cartes (32) qui reçoivent les cartes (8) amenées par le moyen de transport de cartes (16) du rotor (1) et qui, après avoir le chargement avec des données, les ramènent au moyen de transport de cartes (16) du rotor, et **en ce qu'**il est prévu sur le rotor (1) au moins un autre moyen d'établissement de contacts (38) pour effectuer un contrôle par lecture du circuit intégré (35).

2. Dispositif selon la revendication 1, **caractérisé en ce que** l'entraînement rotatif du rotor (1) est réalisé sous forme de moteur pas à pas (9).

3. Dispositif selon la revendication 1 ou 2, **caractérisé en ce qu'**il est prévu un moyen (27) pour déterminer la position de base de la position de rotation du rotor (1).

4. Dispositif selon l'une des revendications précédentes, **caractérisé en ce qu'**il est prévu sur la périphérie du rotor (1) un moyen d'éjection (47) pour des cartes (8) inutilisables ou chargées de données de façon incorrecte.

5. Dispositif selon l'une des revendications précédentes, **caractérisé en ce que** le rotor (1) est réalisé pour retourner les cartes (8).

## Claims

1. An apparatus for personalizing identification cards with integrated circuits, having a rotor with a card transport device, said rotor being rotatable around a rotation axis extending perpendicular to the longitudinal axis of the card, a plurality of contacting devices for simultaneously loading the integrated circuits of a plurality of cards with data, and at least one further personalization station, **characterized in that** the contacting devices (31a...m) for loading the integrated circuits (35) with data are disposed stationarily around the circumference of the rotor (1) and each provided with card transport devices (32) which receive the cards (8) supplied by the card transport device (16) of the rotor (1) and, after the loading with data, transport them back to the card transport device (16) of the rotor (1), and at least one further contacting device (38) is provided on the rotor (1) for a read-after-write check of the integrated circuit (35).

2. The apparatus according to claim 1, **characterized in that** the rotary drive of the rotor (1) is formed as a stepper motor (9).

3. The apparatus according to claim 1 or 2, **characterized in that** a device (27) is provided for determining the basic position of the rotational position of the rotor (1).

4. The apparatus according to any of the above claims, **characterized in that** an ejecting device (47) is provided on the circumference of the rotor (1) for cards (8) that are useless or faultily loaded with data.

5. The apparatus according to any of the above claims, **characterized in that** the rotor (1) is formed for turning over the cards (8).
